# EUROPEAN PATENT APPLICATION

(11) **EP 4 141 488 A1**
(43) Date of publication of application: **01.03.2023**
(21) Application number: 21194148.9
(22) Date of filing: 31.08.2021
(51) Int. Cl.: G01S 17/894

(54) **METHOD FOR PIXEL BINNING IN A TIME-OF-FLIGHT SENSOR, SWITCHED DEVICE FOR A TIME-OF-FLIGHT SENSOR AND COMPUTER PROGRAM**

(71) Applicant: Infineon Technologies AG, 85579 Neubiberg (DE)
(72) Inventor: STATESCU, Victor, 8010 Graz (AT); DIELACHER, Markus, 8046 Graz (AT); FLATSCHER, Martin, 8020 Graz (AT)
(74) Representative: 2SPL Patentanwälte PartG mbB

(57) **Abstract**

An embodiment of a method 100 for pixel binning in a time-of-flight sensor, comprises receiving 101 a first readout signal from a first column of a pixel array of the time-of-flight sensor and receiving 102 a second readout signal from a second column of the pixel array. The method 100 further comprises combining 103 the first readout signal and the second readout signal to obtain a common analog signal useable to determine a distance based on at least two pixels of the time-of-flight sensor.

## Description

### Field

The present disclosure relates to pixel binning in time-of-flight sensors. In particular, embodiments relate to a method for pixel binning in a time-of-flight sensor, a switched device for a time-of-flight sensor and a computer program.

### Background

Time-of-flight (ToF) cameras can generate three dimensional (3D) images comprising information on a distance of an object with respect to the ToF camera. The lateral resolution of the image depends on the size and number of pixels in the pixel array of the ToF sensor. The resolution of the pixel array can be reduced by binning. Binning is the combination of at least two pixels to obtain a larger pixel. Binning is usually applied to improve the signal-to-noise ratio (SNR) of the image since more photons can be collected on the combined pixel area. Signal noise can be further improved, e.g. by implementing correlated double sampling (CDS) determining a difference between signals related to illuminated and unilluminated pixels.

However, performance of current ToF sensors using pixel binning reaches usually its limits due to increased noise in the readout stage. Further, sensors with CDS stage and differential readout stage are complicated to implement. Currently, signal processing at the readout stage requires much power which is desired to be reduced.

### Summary

Hence, there is a desire for improved pixel binning in time-of-flight sensors.

This desire is addressed by the subject matter of the independent claims.

Some embodiments relate to a method for pixel binning in a time-of-flight sensor. The method comprises receiving a first readout signal from a first column of a pixel array of the time-of-flight sensor and receiving a second readout signal from a second column of the pixel array. The method further comprises combining the first readout signal and the second readout signal to obtain a common analog signal useable to determine a distance based on at least two pixels of the time-of-flight sensor. The proposed method may enable a column-wise combination of readout signals in the analog domain. A number of analog-to-digital conversions, and hence power consumption, for digitizing the common analog signal can be reduced. Since less analog-to-digital conversions may be needed, noise may be reduced and less space may be required for implementing analog-to-digital conversion. According to the proposed method, signal processing in combination with CDS and/or differential signals can be enabled with less complexity.

Some embodiments relate to a switched device for a time-of-flight sensor. The switched device comprises first circuitry configured to receive a first readout signal from a first column of a pixel array of the time-of-flight sensor. Further, the switched device comprises a second circuitry configured to receive a second readout signal from a second column of the pixel array. The switched device further comprises a switching circuit comprising at least a first switch. The switching circuit connects a signal path of the first circuitry and a signal path of the second circuitry such that the first readout signal and the second readout signal are combinable to a common analog signal. The switched device may enable a column-wise combination of readout signals in the analog domain. A number of analog-to-digital converters (ADCs), and hence a power consumption, can be reduced for digitizing the common analog signal. Since less ADCs may be needed, less noise may appear and less space may be required for digitizing the common analog signal. According to the proposed architecture, the switched device is useable in combination with CDS and/or differential signals with less complexity.

### Brief description of the Figures

Some examples of apparatuses and/or methods will be described in the following by way of example only, and with reference to the accompanying figures, in which
Fig. 1 illustrates a flow chart of an embodiment of a method for pixel binning in a time-of-flight sensor;
Fig. 2 illustrates an embodiment of a switched device for a time-of-flight sensor;
Fig. 3 illustrates another embodiment of a switched device for a time-of-flight sensor;
Fig. 4 illustrates another embodiment of a switched device for a time-of-flight sensor;
Fig. 5 illustrates another embodiment of a switched device for a time-of-flight sensor;
Fig. 6 illustrates an example of a switched capacitor circuit;
Fig. 7 illustrates another embodiment of a switched device for a time-of-flight sensor;
Fig. 8 illustrates another embodiment of a switched device for a time-of-flight sensor;
Fig. 9 illustrates another embodiment of a switched device for a time-of-flight sensor;
Fig. 10 illustrates an example of a time diagram for control signals for the switched device of Fig. 7 or 8; and
Fig. 11 illustrates an example of a pixel array of a time-of-flight sensor using the method for pixel binning or the switched device for a time-of-flight sensor.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

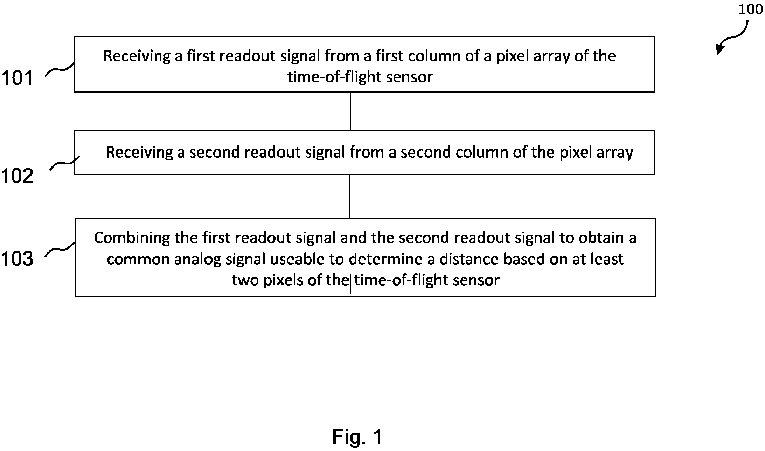

Fig. 1 shows a flowchart of an embodiment of a method 100 for pixel binning in a time-of-flight sensor. The method comprises receiving 101 a first readout signal from a first column of a pixel array of the time-of-flight sensor and receiving 102 a second readout signal from a second column of the pixel array. Further, the method 100 comprises combining 103 the first readout signal and the second readout signal to obtain a common analog signal useable to determine a distance based on at least two pixels of the time-of-flight sensor.

The time-of-flight sensor (or 3D image sensor) comprises a pixel array having a plurality of pixels. A (first) number of pixels of the pixel array may be assigned to the first column and a (second) number of pixels of the pixel array may be assigned to the second column. At least one pixel from the first column provides the first readout signal and at least one pixel from the second column provides the second readout signal. The first and second readout signals are analog signals. The proposed method enables a combination of the first readout signal (related to the first column) and the second readout signal (related to the second column) in the analog domain. Accordingly, column-wise pixel binning (or in-column-binning) is provided. The resulting common analog signal can be further used to determine a distance with respect to the time-of-flight sensor. To calculate a distance, a further independent measurement or an independently determined further analog readout signal may be required. The further analog readout signal may be determined by using the same pair of binned pixels in subsequent measurement. Alternatively, the further analog readout signal may be determined using another pair of binned pixels with different modulation. The proposed method may enable a better sensor performance since a higher SNR can be achieved due to pixel binning. Pixel binning is accomplished column-wise, prior to the analog-to-digital conversion. Since a single common analog signal is provided, only one analog-to-digital conversion may be needed (rather than at least two analog-to-digital conversions for the two readout signals). Since less analog-to-digital conversions may be needed, power consumption and/or the size of the time-of-flight sensor (or processing circuitry thereof, e.g. readout circuitry) can be reduced. Further, the time-of-flight sensor (or the corresponding processing circuitry) may be implementable with less complexity, with less effort or with less components (which in turn may reduce error sources). Further, the proposed technique may be useable with differential signals and in conjunction with CDS (e.g. being implemented prior to provision of the common analog signal). The proposed method is suitable for implementation on column level, e.g. close to the pixel outputs.

The first readout signal is an analog signal from the first column. For example, the first readout signal may be an analog signal from a single pixel of the first column. According to another example, the first readout signal may be an analog signal from a plurality (e.g. two, three or more) of pixels from the first column. The plurality of pixels of the first column may be combined to a first group (e.g. by in-pixel-binning within the first column) supplying the first readout signal to be further processed according to the proposed method.

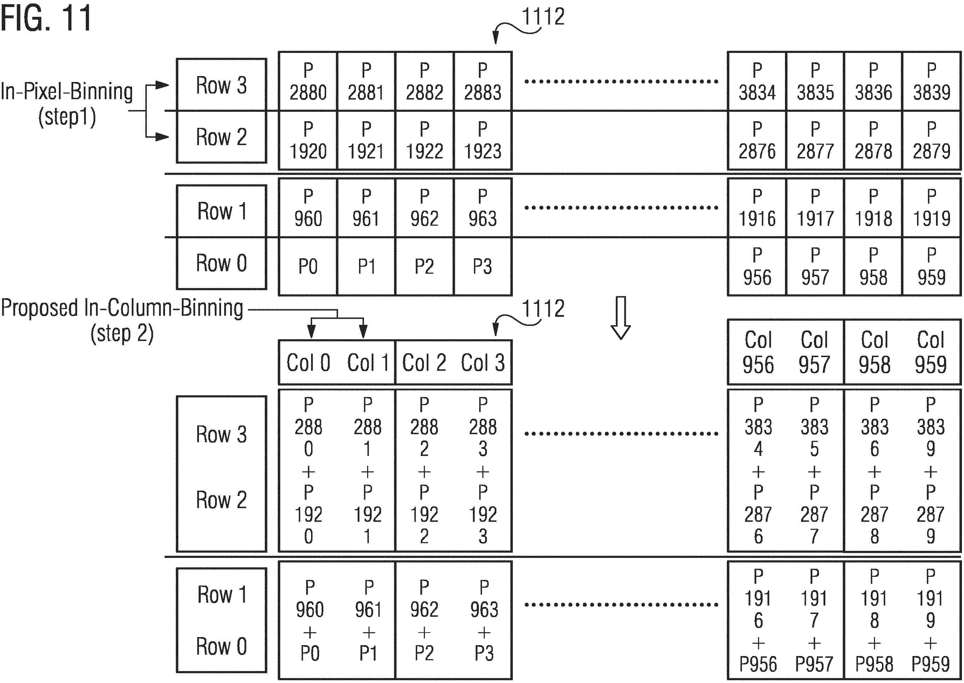

The second readout signal may be similar to the first readout signal with respect to the second column. Hence, the second readout signal may be an analog signal from one pixel or a plurality of pixels (assigned to a group) of the second column. For example, the second column may be next to (or a direct neighbor of) the first column. Accordingly, the one or more pixels of each column may be located next to each other in the pixel array. Since column-wise binning can be also implemented for a group of pixels of each column, the proposed method can be useable to achieve horizontal and vertical (e.g. 2x2, 3x3, 2x3 related to the sub-array of the pixel array) pixel binning. In other words, the method 100 optionally further comprises combining signals from at least two neighboring pixels of the first column to generate the first readout signal and combining signals from at least two neighboring pixels of the second column to generate the second readout signal. Further details concerning this aspect are described in conjunction with Fig. 11.

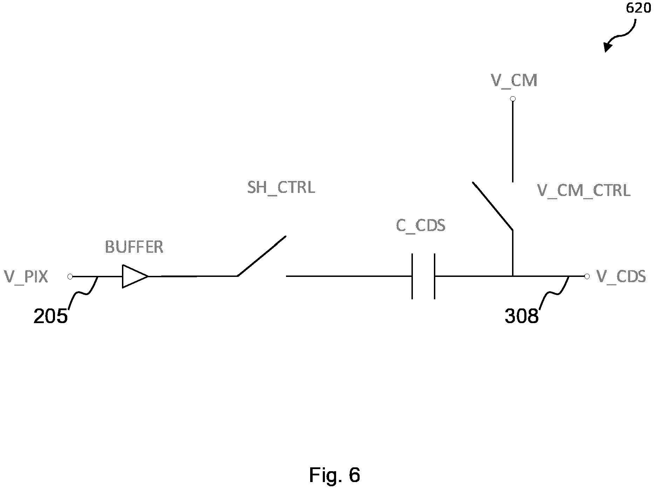

As described above, the proposed method may be useable in combination with CDS. For example, the method 100 further comprises using CDS for the first readout signal and the second readout signal before combining the first readout signal and the second readout signal. By this, each of the readout signals may comprise less noise (e.g. kTC noise) since pixels outputs can be corrected by using a reference signal (or reset signal, being provided if pixels are not illuminated). Hence, the proposed method applying CDS may allow to reduce errors in the first and second readout signal, and thus in the common analog signal and the digital representation thereof. Further details concerning this aspect are described in conjunction with Figs 6-10.

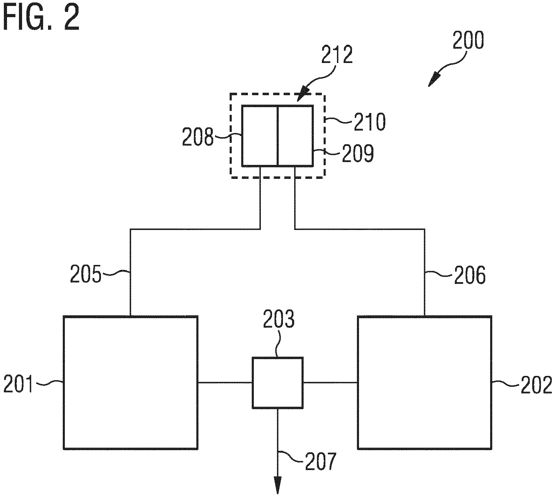

The common analog signal can be obtained by combining the first and second readout signal. For example, combining 103 the first readout signal and the second readout signal comprises averaging the first readout signal and second readout signal. Averaging in the analog domain may be achievable by a switching circuit. For example, the method 100 further comprises controlling a switching circuit comprising at least a first switch connecting a signal path of the first readout signal and a signal path of the second readout signal to obtain the common analog signal. Further details to this aspect are described in conjunction with Fig. 2-4.

As described above, the proposed method may enable to reduce the number of analog-to-digital conversions. For example, if the time-of-flight sensor provides one ADC for each column, only one (of the two) ADC(s) may be needed for converting the common analog signal. For example, the method 100 may comprise activating an ADC corresponding to the first readout signal and deactivating an ADC corresponding to the second readout signal or vice versa to generate a digital signal based on the common analog signal. Due to deactivation of one ADC (which might be not needed since only the (single) common analog signal is to be converted) a power consumption and/or errors (e.g. due to crosstalk between ADCs) can be reduced. Further details to this aspect are described in conjunction with Figs. 2-4.

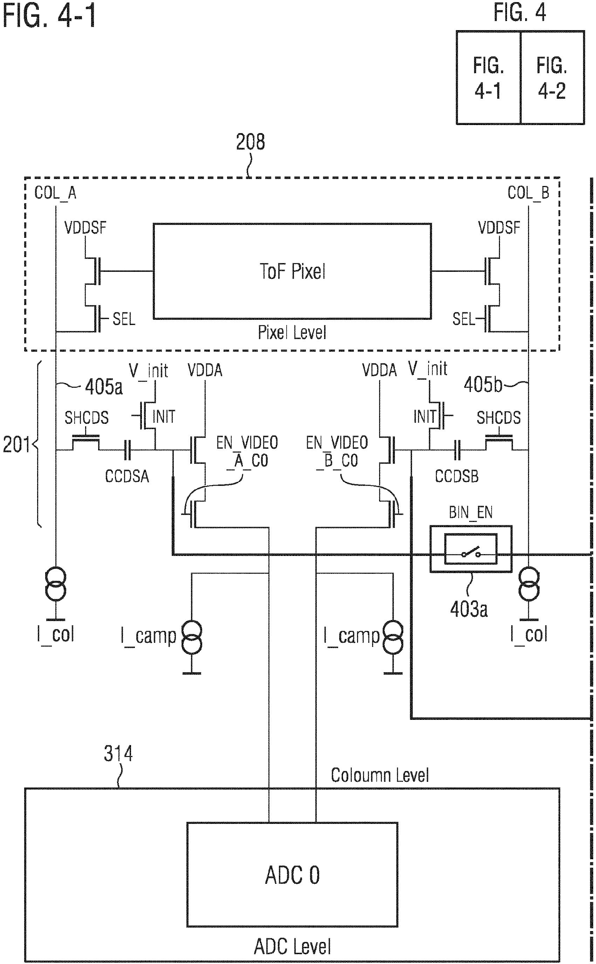

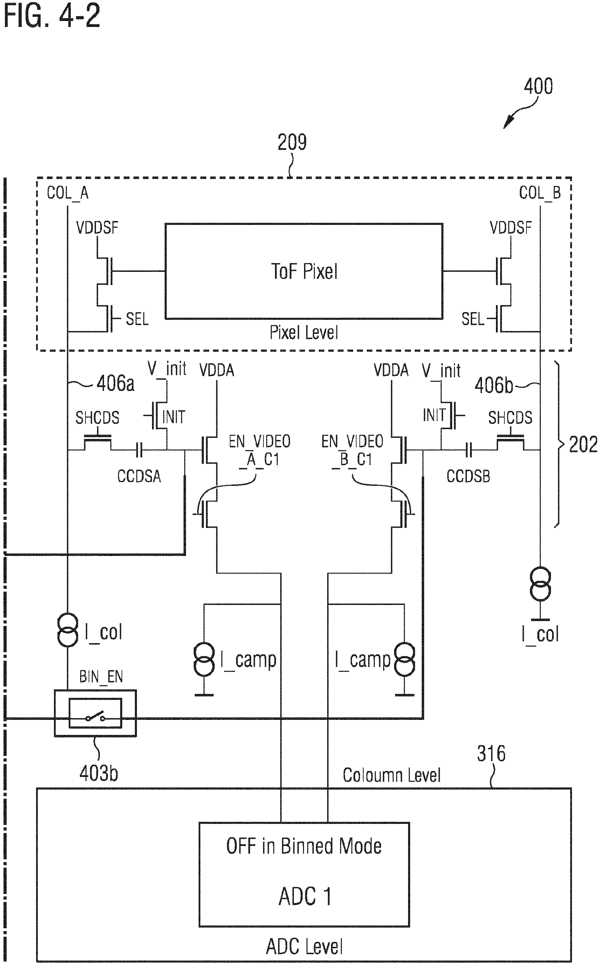

The first and second readout signals may be differential signals each comprising a first signal portion and a second signal portion. For differential signals, controlling the switching circuit (as described above) may enable a combination of the first portions of the first and second readout signals and a combination of the second portions of the first and second readout signals. Hence, column-wise pixel binning can be provided for each of the respective signal pairs of the differential readout signals. Accordingly, a proper differential common analog signal can be provided and further processed, e.g. converted to digital. Further details concerning this aspect are described in conjunction with Fig. 4.

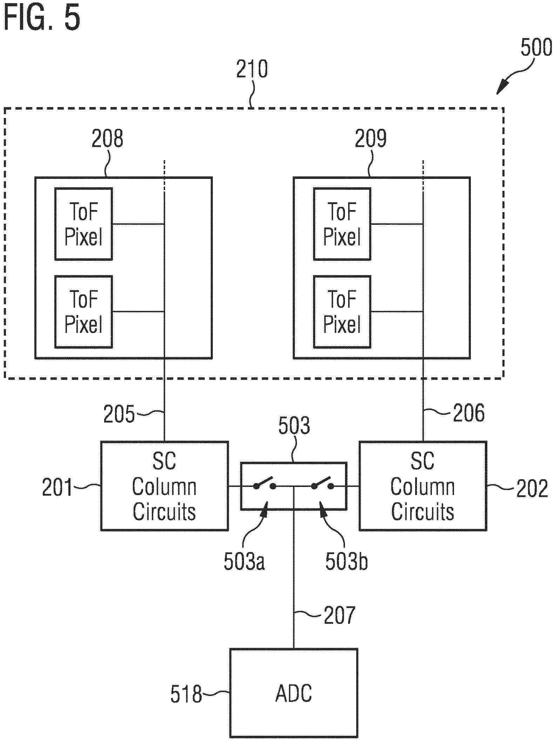

Apart from the first switch, the method may optionally control a second switch of the switching circuit. For example, the method 100 comprises controlling the at least first switch and a second switch of the switching circuit. The second switch may connect the first switch and the signal path of the second readout signal. The first and second switch of the switching circuit may be activated and deactivated simultaneously such that proper combination of the first readout signal and the second readout signal can be achieved. By controlling two switches in the switching circuit rather than only one switch in the switching circuit, signal routing, e.g. to an ADC, may be reduced and/or one ADC can be shared for the first readout signal and the second readout signal. A deactivation of another ADC might not be necessary. For example, the method 100 comprises generating a digital signal based on the common analog signal by means of a common ADC coupled to the switching circuit. Further details concerning this aspect are described in conjunction with Figs. 5-9.

The proposed method 100 may enable an improved implementation of or improved processing in time-of-flight sensors. The time-of-flight sensor can be used to supply a 3D image providing distance information of an object (relative to the time-of-flight sensor) to be illuminated. With the proposed method 100 the 3D image may be of higher quality since SNR due to pixel binning may be improved.

Although not explicitly illustrated in Fig. 1, the method 100 may comprise, as exemplarily stated above, additional or optional aspects. Aspects described in relation to the method 100 shall also be understood as a description of a corresponding block, a corresponding element, a property or a functional feature of a corresponding (e.g. switched) device or a corresponding system. In the following a switched device is described according to several examples. Some exemplary switched devices showing further details of the proposed technique (in conjunction with the proposed method) will be given with reference to Figs. 2 to 11.

Fig. 2 shows an embodiment of a switched device 200 for a time-of-flight sensor 210. The switched device 200 comprises first circuitry 201 configured to receive a first readout signal 205 from a first column 208 of a pixel array 212 of the time-of-flight sensor 210. The switched device 200 further comprises second circuitry 202 configured to receive a second readout signal 206 from a second column 209 (being different from the first column 208) of the pixel array 212. The switched device 200 further comprises a switching circuit 203 comprising at least a first switch. The switching circuit 203 connects a signal path of the first circuitry 201 and a signal path of the second circuitry 202 such that the first readout signal 205 and the second readout signal 206 are combinable to a common analog signal 207.

The switched device 200 may enable an (structural) implementation of the method 100 for pixel binning in a time-of-flight sensor described in connection with Fig. 1. For example, the switched device 200 may be arranged below (e.g. close to the opposite side to the sensitive area of) the time-of-flight sensor such that binning of at least two pixels from different (e.g. neighboring) columns can be achieved. As indicated by the dashed lines, the time-of-flight sensor 210 is an optional component usable in combination with the proposed switched device 200. It is to be understood that the switched device 200 can be implemented separately from the time-of-flight sensor 210. The first circuitry 201 may be coupled to the first column 208 of the pixel array 212 to receive the first readout signal 205 and the second circuitry 202 may be coupled to the second column 209 of the pixel array 212 to receive the second readout signal 206. The first and second readout signals 205, 206 are analog signals. The first circuitry 201 comprises (at least) a first signal path routing (or processing) the first readout signal 205 and the second circuitry 202 comprises (at least) a second signal path routing (or processing) the second readout signal 206. The first signal path (or the first circuitry 201) and the second signal path (or the second circuitry 202) are coupled to the switching circuit 203. The switching circuit 203 comprises one or more switches (e.g. a first switch and optionally a second switch) enabling a coupling (e.g. for activated switch(es)) or decoupling (e.g. for deactivated switch(es)) of the first signal path with the second signal path. By means of (e.g. activated switch(es) of) the switching circuit 203 the common analog signal 207 can be obtained. For example, the common analog signal 207 is an average of the first readout signal 205 and second readout signal 206.

The switched device 200 may enable binning of different (e.g. neighboring) columns 208, 209 of the pixel array 212 of the time-of-flight sensor 210. The switched device 200 may enable a combination of the output of, e.g. two differential pixels, while preserving a CDS operation for removal of kTC noise. The proposed implementation may use a switched capacitor network. Hence, no extra current consumption branch may be needed in the readout path and thus a low power consuming implementation can be provided.

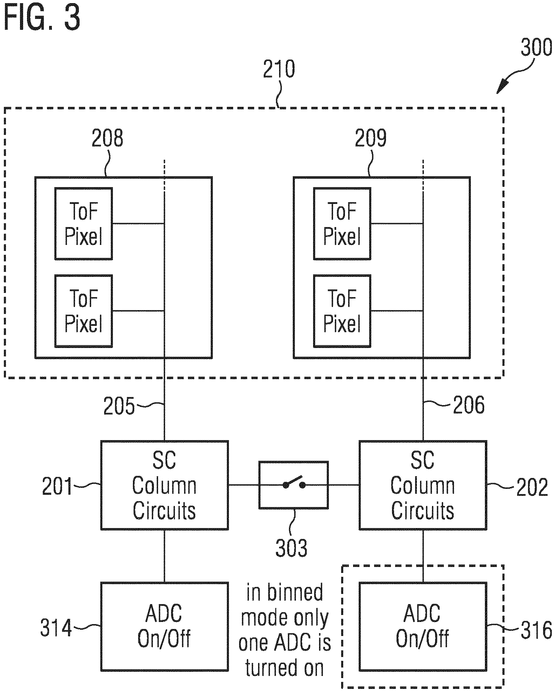

Although not explicitly illustrated in Fig. 2, the switched device 200 may comprise additional or optional circuitry (components). For example, the switched device 200 may comprise one or more ADCs, one or more capacitors, one or more switches or one or more buffers. It is to be understood that the switched device may be useable for single-implemented signals and differential signals. Some exemplary switched devices showing further details of the proposed technique will be described in the following with reference to Figs. 3 to 11.

Fig. 3 shows another embodiment of a switched device 300. The implementation of the switched device 300 may be similar to the implementation of the switched device 200 described in connection with Fig. 2. The switched device 300 receives the first readout signal 205 from the first column 208 (from one pixel or a plurality of pixels as described in connection with the proposed method) and the second readout signal 206 from the second column 209 (from one pixel or a plurality of pixels as described in connection with the proposed method) of the time-of-flight sensor 210. The first circuitry 201 processing the first readout signal 205 and the second circuitry 202 processing the second readout signal 206 can be coupled and decoupled by the switching circuit 303. According to the example, the switching circuit 303 comprises a single (e.g. first) switch. Activation of the first switch enables a combination (e.g. averaging) of the first readout signal 205 and the second readout signal 206 in the analog domain. The common analog signal can be processed (e.g. passed to an ADC) by means of the first circuitry 201 or by means of the second circuity 202.

Since (a single) common analog signal is provided by the switching circuit 303, the switched device 300 may (only) comprise either an ADC 314 coupled to the first circuitry to generate a digital signal based on the common analog signal or an ADC 316 coupled to the second circuitry 202 to generate a digital signal based on the common analog signal. Alternatively, the switched device 300 may comprise both ADCs 314, 316 wherein only one ADC (e.g. ADC 314) is activated (or actively operating e.g. sampling and converting) and the other ADC (e.g. ADC 316) is deactivated (e.g. turned off or in stand-by mode). The former implementation using only one ADC may be suitable, e.g. to reduce the number of components (and thus expenses or errors). The latter implementation using two ADCs may be suitable, e.g. to enable usage of the switched device 300 in combination with the time-of-flight sensor 210 also if column-wise binning is not applied (no binning operation if the switching circuit 303 is deactivated or decoupling the first and second signal path). Since only one ADC is actively operating in both implementations, power consumption and errors (e.g. due to crosstalk between the first and second ADC) can be reduced. The ADC may be, e.g. a flash ADC, successive approximation ADC, delta-sigma ADC or any type of ADC suitable to sample and convert common analog signals being based on time-of-flight readout signals.

Fig. 3 exemplarily shows the switched device 300 with single-ended signals. Fig. 4 illustrates a switched device 400 (being similar to the implementation of the switched device 300 described in connection with Fig. 3) with differential signals.

As illustrated, the first readout signal 405a-b and second readout signal 406a-b are differential signals each comprising a first signal portion 405a, 406a and a second signal portion 405b, 406b. The at least first switch 403a connects the signal path of the first circuitry 201 and the signal path of the second circuitry 202 such that the first portions 405a, 406a of the first and second readout signals are combinable. The switching circuit further comprises a further switch 403b connecting the signal path of the first circuitry 201 and the signal path of the second circuitry 202 such that the second portions 405b, 406b of the first and second readout signals are combinable. Hence, column-wise binning can be enabled by implementing at least one switch for a respective portion of the differential signals. By means of the at least first switch 403a the first portion 405a of the first differential readout signal and the first portion 406a of the second differential readout signal can be combined to obtain a first portion of the common analog signal to be passed to either the activated ADC 314 corresponding to the first circuitry 201 (while the ADC 316 corresponding to the second circuitry 202 is deactivated) or to the activated ADC 316 corresponding to the second circuitry 202 (while the ADC 314 corresponding to the first circuitry 201 is deactivated). Similarly, by means of the further switch 403b the second portion 405b of the first differential readout signal and the second portion 406b of the second differential readout signal can be combined to obtain a second portion of the common analog signal to be passed to either the activated ADC 314 corresponding to the first circuitry 201 or to the activated ADC 316 related to the second circuitry 202.

As shown in Fig. 4, the first and second circuitry 201, 202 comprises a plurality of capacitors and transistors for processing the first and second readout signals 405a-b, 406a-b. It is to be understood that the shown implementation of the first and second circuity 201, 202 is only given by way of example.

More details and aspects are mentioned in connection with the examples described above or below. The example shown in Figs. 3 or 4 may comprise one or more optional additional features corresponding to one or more aspects mentioned in connection with the proposed technique or one or more examples described above (e.g. Figs. 1-2) or below (e.g. Figs. 5-11).

Fig. 5 shows another example of a switched device 500 with a switching circuit 503. The implementation of the switched device 500 may be similar to the implementation of the switched device 200, 300, 400 described in connection with Figs. 2-4. The switching circuit 503 comprises a first switch 503a connecting the signal path of the first circuitry 201 and a signal path of the second circuitry 202 via a second switch 503b of the switching circuit 503. The second switch 503b connects the at least first switch 503a and the signal path of the second circuitry 201 such that the first readout signal 205 and the second readout signal 206 are combinable to the common analog signal 207. As exemplarily illustrated, the at least first switch 503a and the second switch 503b may be connected directly to each other.

The proposed implementation with the switching circuit 503 comprising the first and second switch 503a-b may be suitable to achieve faster signal routing of the common analog signal 207. In other words, by the proposed implementation the common analog signal 207 can be passed to a processing circuitry, e.g. ADC, by a shorter signal path. Due to the shorter signal path, power dissipation can be reduced. The shorter signal path may be achievable since the common analog signal might not need to be processed (e.g. passed) by either the first circuitry 201 or the second circuitry 202 for the subsequent analog-to-digital conversion. The common analog signal 207 can be rather directed to a common circuit (e.g. common ADC 518) which can be shared (or used) by both the first circuitry 201 and second circuitry 202.

The common analog signal 207 can be generated at a common node connecting the signal path of the first circuitry 201 and the signal path of the second circuity 202 by means of activated first and second switches 503a-b. As illustrated, the common node may be located between the first switch 503a and the second switch 503b. Deactivation of both the first switch 503a and the second switch 503b may turn off a binning operation (or mode) of the switched device 500. In this case, the switched device 500 may be useable in a standard mode, e.g. by successively converting the first readout signal 201 and the second readout signal 202 by the common ADC 518.

As described, the switched device 500 comprises a common ADC 518. The common ADC 518 is coupled to the first switch 503a and the second switch 503b and is configured to generate a digital signal based on the common analog signal 207. Similarly as described in conjunction with proposed embodiments described above, only one ADC may be needed for reading out two columns of the time-of-flight sensor. Compared to the switched device 300 described in connection with Fig. 3, the switched device 500 of Fig. 5 may enable faster processing of the first and second readout signals 205, 206 due to shorter signal routing.

More details and aspects are mentioned in connection with the examples described above or below. The example shown in Fig. 5 may comprise one or more optional additional features corresponding to one or more aspects mentioned in connection with the proposed technique or one or more examples described above (e.g. Figs. 1-4) or below (e.g. Figs. 6-11).

As described above, the proposed technique may be useable in combination with a CDS stage, e.g. being implemented in the first and second circuitry 201, 202 of the switched device. For example, each (circuitry) of the first and second circuitry 201, 202 comprises a switched capacitor circuit enabling CDS for the corresponding first or second readout signal 205, 206. Fig. 6 illustrates an exemplary implementation of a switched capacitor circuit 620 of e.g. the first circuitry (or second circuitry) for CDS. The switched capacitor circuit 620 receives the first readout signal 205 (or second readout signal) from the first column (or second column) of the pixel array. A buffer generates a buffered signal based on the first (or second) readout signal. The buffered signal is passed via a switch SH CTRL to a first connection of a capacitor C CDS. Further, a reset signal V_CM from the (first or second) column is passed to another connection of the capacitor C CDS such that the output of the switched capacitor circuit 620 relates to a difference between the buffered (first or second) readout signal and the reset signal from the (first or second) column. The reset signal is a readout signal from the column in case the pixel array is not illuminated (e.g. by a shutter). By subtracting the reset signal form the buffered readout signal, kTC noise may be compensated (or at least reduced).

Hence, the CDS capacitance C CDS may ensure a correct subtraction of the two signals V_PIX and V_CM coming from the same column (or pixel). The output 308 (V_CDS) of the switched capacitor circuit 620 can be further used by the switching circuit to obtain the common analog signal as proposed. Fig. 6 relates to a single-ended implementation of the CDS stage.

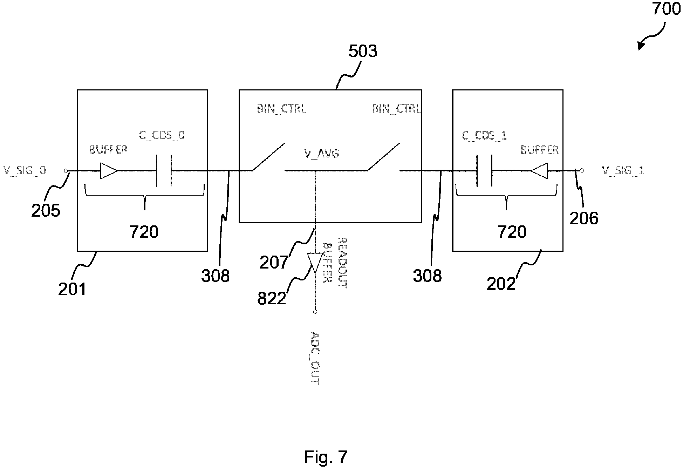

Fig. 7 shows another embodiment of a switched device 700 comprising two switched capacitor circuits 720 (one for each column) enabling CDS. The implementation of the switched capacitor circuits 720 may be similar to the implementation of the switched capacitor circuit 620 described in connection with Fig. 6 (for simplicity, reset signal paths and switches are not illustrated in the switched capacitor circuits 720). As exemplarily shown, the output of the switched capacitor circuits 720 (or first and second circuitry 201, 202 each comprising the switched capacitor circuit 720) can be combined via the switching circuit 503 to obtain the common analog signal 207. The switched device 700 comprises a readout buffer 822 buffering the common analog signal 207. The buffered common analog signal can be directed to, e.g. a common ADC converting the analog output of the switched device 700 to digital. According to another example, the first and second circuitry 201, 202 comprising switched capacitor circuits 720 may be coupled to a switching circuit (e.g. switching circuit 303) described in connection with Fig. 3. The example shown in Fig. 7 may be an implementation for single-ended signals.

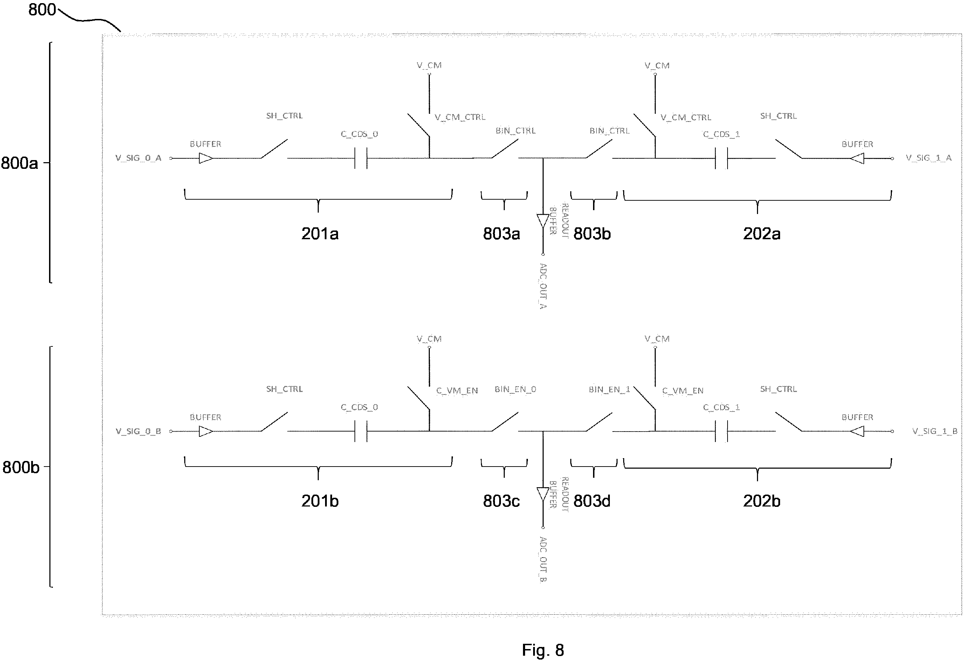

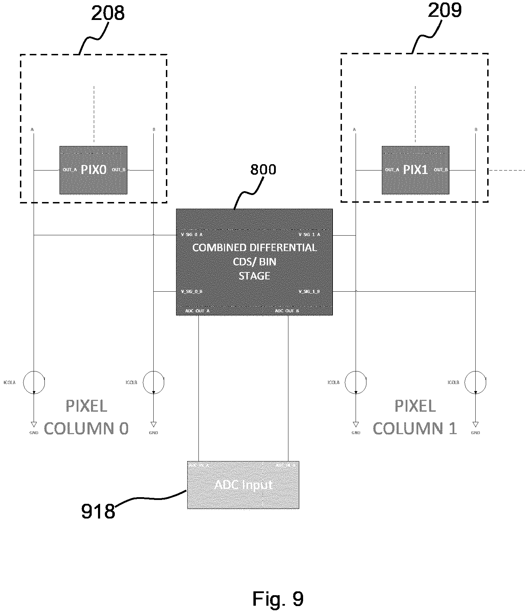

Fig. 8 shows another example of a switched device 800 enabling CDS and using differential signals. The (differential) switched device 800 comprises two (single-ended) switched devices 800a-b. The implementation of the (single-ended) switched devices 800a-b may be similar to the implementation of the switched devices 700 described in connection with Fig. 7. According to the example, the switching circuit of the (first single-ended) switched device 800a comprises a first switch 803a connecting the signal path of the first circuitry 201a and the signal path of the second circuitry 202a such that the first portions of the first and second readout signals are combinable. Similarly, the switching circuit of the (second single-ended) switched device 800b comprises a further switch 803c connecting the signal path of the first circuitry 201b and the signal path of the second circuitry 202b such that the second portions of the first and second readout signals are combinable. The switching circuit of the (first single-ended) switched device 800a further comprises a second switch 803b connecting to the first switch 803a such that the first portions of the first and second readout signals are combinable. The switching circuit of the (second single-ended) switched device 800b further comprises an additional switch 803d connecting the signal path of the further switch 803c and the signal path of the second circuitry 202b such that the second portions of the first and second readout signals are combinable. Hence, the proposed technique can enable column-wise binning of ToF readout signals in combination with a CDS stage. The (differential) switched device 800 can be used in combination with a differential common ADC, as exemplarily shown in Fig. 9.

Fig. 9 shows the switched device 800 processing two differential columns from a ToF sensor readout, named PIXEL COLUMN 0 and PIXEL COLUMN 1. Inside these columns only two differential pixel connections are exemplified. The proposed switched device 800 is placed, e.g. under the pixel array, connected between each two neighboring columns. Each pixel output is comprised of two signal levels: reset value and signal value. By taking the reset level and the signal level generated by it the correlated double sampling can be performed.

Fig. 9 relates to a CDS implementation in the columns, e.g. to be able to process readout signals as close as possible to the pixel (or column) output. As described above, CDS relies on subtracting the pixel signal level from the correlated reset level. The correlation can be ensured by carefully considering pixel control signals. This subtraction can be performed at several stages in the sensor readout chain. By carefully controlling the timing, the switched device can use the result of the CDS subtraction to perform averaging of the results of the two neighboring columns.

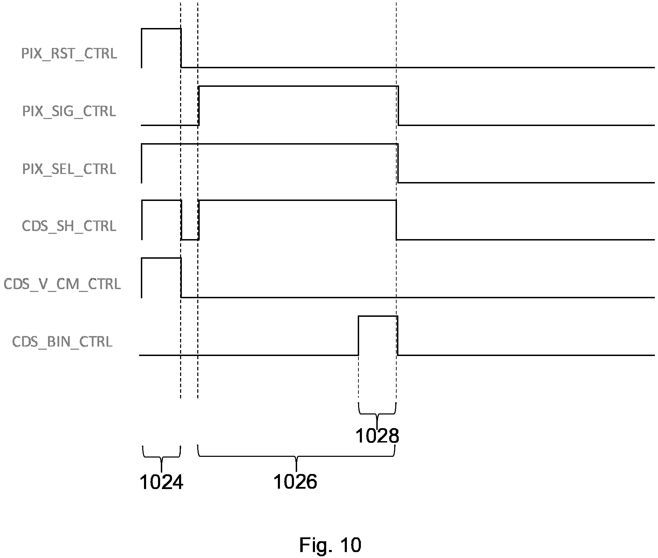

Fig. 10 illustrates an example of a time diagram for control signals for the switched device 700 or 800 described in connection with Fig. 7 or 8. The control signals can enable a selective activation and/or deactivation of the switches of the switched device 700, 800 to enable proper in-column-binning. The control signal PIX_SEL_CTRL may activate a switch (not shown) in the switched device for selecting the respective column (comprising one or more pixels) to be combined as proposed. The control signal PIX_RST_CTRL and CDS_V_CM_CTRL can activate switches (among them e.g. switches V_CM_CTRL, SH_CTRL described in connection with Fig. 6) during a first time period 1024 to conclude on the (e.g. kTC) noise in (one or more pixels of) the respective column of the pixel array. During a second time period 1026 the control signals PIX_SIG_CTRL and CDS_SH_CTRL may activate switches (among them e.g. switch SH_CTRL described in connection with Fig. 6) to accumulate charge in the ToF sensor and to shift the accumulated charge to a floating capacitor of the ToF sensor. At the end of the second time period (e.g. third time period 1028 < second time period 1026), the control signal CDS_BIN_CTRL can activate one or more switches in the switching circuit of the switched device to enable proper combination (e.g. averaging) of the CDS based first and second readout signals. For example, the control signal CDS_BIN_CTRL activates the first switch (and the further switch for differential implementations) and optionally the second switch (and the additional switch for differential implementations). For example, control signals may be provided by an external entity. As shown, selectively coupling and decoupling of signals paths can accomplish CDS and column-wise binning in the analog domain.

As described above, a readout signal from a column of the pixel array may relate to one or more pixels of the column. Fig. 11 exemplarily shows sections of a pixel array 1112 of a ToF sensor. According to the example, e.g. pixels P2880 (Row 3) and P1920 (row 2) are combined (e.g. 1x2- or row-wise in-pixel-binning) to obtain the first readout signal and e.g. pixels P2881 (Row 3) and P1921 (row 2) are combined to obtain the second readout signal. The first and second read signals can be combined as proposed to achieve column-wise pixel binning in the analog domain. For example, the (1x2-combined) pixels P2880+P1920 and P2881+P1921 can be combined according to the proposed method or switched device to obtain the common analog signal (e.g. by 2x1 in-column-binning at column readout level). Hence, the common analog signal can be based on 2x2 pixel binning. Similarly, pixel binning can be applied for the remaining pixels of the ToF sensor. The proposed technique may be applied to readout signals being based on more than two (e.g. three, four etc.) row-wise binned pixels. Accordingly, the effective pixel area can be increased.

In some aspects, the proposed technique can be used for processing the data in analog domain, e.g. without additional power consumption penalty (since collected charges is only shifted to a common collection point).

In some aspects, the proposed technique may enable a faster read-out time.

In some aspects, the proposed technique may improve SNR since no (or only reduced readout noise) may be present by using CDS and column-wise binning.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for pixel binning in a time-of-flight sensor, comprising:
receiving (101) a first readout signal from a first column of a pixel array of the time-of-flight sensor;
receiving (102) a second readout signal from a second column of the pixel array; and
combining (103) the first readout signal and the second readout signal to obtain a common analog signal useable to determine a distance based on at least two pixels of the time-of-flight sensor.

2. The method (100) according to claim 1, further comprising:
controlling a switching circuit comprising at least a first switch connecting a signal path of the first readout signal and a signal path of the second readout signal to obtain the common analog signal.

3. The method (100) according to claim 1 or 2, wherein
combining (103) the first readout signal and the second readout signal comprises averaging the first readout signal and second readout signal.

4. The method (100) according to one of the preceding claims, further comprising:
combining signals from at least two neighboring pixels of the first column to generate the first readout signal; and
combining signals from at least two neighboring pixels of the second column to generate the second readout signal.

5. The method (100) according to one of the preceding claims, further comprising:
using correlated double sampling for the first readout signal and the second readout signal before combining the first readout signal and the second readout signal.

6. The method (100) according to one of the preceding claims, further comprising:
activating an analog-to-digital converter corresponding to the first readout signal and deactivating an analog-to-digital converter corresponding to the second readout signal or vice versa to generate a digital signal based on the common analog signal.

7. The method (100) according to one of claims 2 to 6, wherein
the first and second readout signals are differential signals each comprising a first signal portion and a second signal portion,
wherein controlling the switching circuit enables a combination of the first portions of the first and second readout signals and a combination of the second portions of the first and second readout signals.

8. The method (100) according to one of claims 2 to 7, wherein
controlling the switching circuit comprises controlling the at least first switch and a second switch of the switching circuit, the second switch connecting the first switch and the signal path of the second readout signal.

9. The method (100) according to one of claim 2 to 8, further comprising:
generating a digital signal based on the common analog signal by means of a common analog-to-digital converter coupled to the switching circuit.

10. A switched device (200, 300, 400, 500, 700, 800) for a time-of-flight sensor, comprising:
first circuitry (201) configured to receive a first readout signal (205) from a first column (208) of a pixel array (212) of the time-of-flight sensor (210);
second circuitry (202) configured to receive a second readout signal (206) from a second column (209) of the pixel array (212); and
a switching circuit (203) comprising at least a first switch, the switching circuit (203) connecting a signal path of the first circuitry (201) and a signal path of the second circuitry (202) such that the first readout signal (205) and the second readout signal (206) are combinable to a common analog signal (207).

11. The switched device (200) according to claim 10, wherein
the common analog signal (207) is an average of the first readout signal (205) and second readout signal (206).

12. The switched device (200) according to claim 10 or 11, wherein
each circuitry of the first and second circuitry (201, 202) comprises a switched capacitor circuit (620) enabling correlated double sampling for the corresponding first or second readout signal (205, 206).

13. The switched device (200) according to one of claims 10 to 12, further comprising:
an analog-to-digital converter (314, 316) coupled to the first circuitry (201) or to the second circuitry (202) to generate a digital signal based on the common analog signal (207).

14. The switched device (200) according to one of claims 10 to 13, wherein
the first readout signal (205) and second readout signal (206) are differential signals each comprising a first signal portion and a second signal portion.

15. The switched device (400) according to claim 14, wherein
the at least first switch (403a) connects the signal path of the first circuitry (201) and the signal path of the second circuitry (202) such that the first portions (405a, 406a) of the first and second readout signals are combinable,
wherein the switching circuit (303) further comprises a further switch (403b) connecting the signal path of the first circuitry (201) and the signal path of the second circuitry (202) such that the second portions (405b, 406b) of the first and second readout signals are combinable.

16. The switched device (500) according to one of claims 10 to 15, wherein
the switching circuit (503) further comprises a second switch (503b) connecting the at least first switch (503a) and the signal path of the second circuitry (202) such that the first readout signal (205) and the second readout signal (206) are combinable to the common analog signal (207).

17. The switched device (800) according to claim 16, wherein
the second switch (803b) connects such that the first portions of the first and second readout signals are combinable,
wherein the switching circuit (503) further comprises an additional switch (803d) connecting the signal path of the further switch (803c) and the signal path of the second circuitry (202b) such that the second portions of the first and second readout signals are combinable.

18. The switched device (500) according to claim 16 or 17, wherein
the at least first switch (503a) and the second switch (503b) are connected directly to each other.

19. The switched device (500) according to one of claims 16 to 18, further comprising:
a common analog-to-digital converter (518) coupled to the first switch (503a) and the second switch (503b) and configured to generate a digital signal based on the common analog signal (207).

20. A computer program having a program code configured to cause performing a method (100) of one of claims 1 to 9 if the computer program is executed by a programmable hardware component.
